# EUROPÄISCHE PATENTSCHRIFT

(11) **EP 2 589 454 B1**
(45) Veröffentlichungstag und Bekanntmachung des Hinweises auf die Patenterteilung: **30.03.2016**
(21) Anmeldenummer: 11187786.6
(22) Anmeldetag: 04.11.2011
(51) Int. Cl.: B23K 9/095, B23K 9/10, B23K 9/29, B23K 9/32

(54) **Steuereinheit für ein Schweißgerät, Schweißbrenner mit einer Datenschnittstelle, und Schweißgerät mit solchen Einrichtungen**
Control unit for a welding device, welding torch with an interface, and welding apparatus with such components
Unité de commande pour un appareil de soudage, torche de soudage avec une interface, et appareil de soudage avec de tels composants

(43) Veröffentlichungstag der Anmeldung: 08.05.2013
(73) Patentinhaber: EWM AG, 56271 Mündersbach (DE)
(72) Erfinder: Szczesny, Michael, 56271 Mündersbach (DE)
(74) Vertreter: Cohausz & Florack

(56) Entgegenhaltungen:
- EP-A1- 0 854 006
- EP-A1- 2 255 916
- US-A- 5 357 076
- US-A1- 2007 056 934
- US-A1- 2011 220 616

## Beschreibung

Die Erfindung betrifft eine Steuereinheit für ein Schweißgerät, gemäß dem Oberbegriff des Anspruchs 1.

Ebenso betrifft die Erfindung einen Schweißbrenner mit einer Datenschnittstelle gemäß dem Oberbegriff des Anspruchs 8, der mit der Steuereinheitsschnittstelle einer erfindungsgemäßen Steuereinheit für ein Schweißgerät verbindbar ist.

Schließlich betrifft die Erfindung ein Schweißgerät mit einer erfindungsgemäßen Steuereinheit, einem erfindungsgemäßen Schweißbrenner und gegebenenfalls mit Verbindungsmitteln, siehe Ansprüche 11 und 12.

Steuereinheiten der oben genannten Art sind aus dem Stand der Technik bekannt. So offenbart die EP 1 047 521 B9 ein Schweißgerät, bei dem eine an einem Schweißbrenner angeordnete Eingabevorrichtung und eine Ausgabevorrichtung über eine serielle Schnittstelle mit einem Datenbus verbunden sind, welcher wiederum an eine als Mikroprozessorsteuerung ausgestaltete Steuereinheit eines Schweißgeräts angekoppelt ist. Somit wird der Datenaustausch zwischen der Mikroprozessorsteuerung einerseits und der Eingabevorrichtung bzw. der Ausgabevorrichtung andererseits ermöglicht.

Bei diesem Stand der Technik, treten Schwierigkeiten auf, wenn ein Schweißbrenner mit der Steuereinheit verbunden werden soll, der zum Einleiten eines Schweißvorgangs einen herkömmlichen Brennertaster einsetzt. Bekanntlich arbeitet ein derartiger Brennertaster so, dass durch die Betätigung des Brennertasters ein Stromkreis unterbrochen oder auch geschlossen wird. Die Folge hiervon ist, dass ein Stromfluss unterbrochen bzw. ermöglicht wird. In dem Stromfluss ist somit die Information über den Schaltzustand des Brennertasters codiert. Zusätzliche Informationen - beispielsweise zur Fehlerkorrektur - werden nicht übertragen. Die Überwachung des Stromkreises dahingehend, ob ein Strom fließt oder nicht, erlaubt die Detektion der Betätigung des Brennertasters und die vollständige Erfassung der vom Brennertaster ausgehenden Informationen. Die Steuereinheit eines Schweißgeräts kann auf das Detektionsergebnis reagieren, indem sie bei einem Lichtbogenschweißgerät das Leistungsteil veranlasst, eine Lichtbogenzündung durch Generieren eines geeigneten Stromverlaufs durchzuführen.

Es erfolgt lediglich eine unidirektionale Informationsübertragung ausgehend vom Brennertaster. Eine Informationsübertragung hin zum Brennertaster findet nicht statt. Die Verbindung vom Brennertaster des Schweißbrenners und der Steuereinheit erfolgt meist über zwei Leiter (Hin- und Rückleiter). Die Steuereinheitsschnittstelle wird entsprechend von zwei Leiteranschlüssen gebildet.

Für die Übertragung komplexerer Informationen als die von einem Brennertaster ausgehenden - beispielweise konkrete Zahlenwerte von Schweißparametern wie der Schweißstromstärke - ist dagegen auf der Seite von Schweißbrennern üblicherweise eine spezielle Datenschnittstelle vorgesehen. Über sie erfolgt in vielen Fällen ein bidirektionaler Informationsaustausch. Es werden häufig Übertragungsprotokolle eingesetzt, die Maßnahmen zur Fehlererkennung und zum Umgang mit Kollisionen auf dem Übertragungsmedium implementieren. Als Datenschnittstellen von Schweißbrennern werden daher bisher ebenfalls komplexer aufgebaute Schnittstellen, beispielsweise RS-232 Schnittstellen, die über eigens für die Übertragung von Steuersignalen vorgesehenen Pins verfügen, eingesetzt. Es sind dann geeignete Kabel zu verwenden, die eine Vielzahl von Leitern enthalten. Diese Kabel sind vergleichsweise dick und schwer sowie mechanisch wenig flexibel. Steuereinheiten von Schweißgeräten, die mit Schweißbrenner, die eine derartige Datenschnittstelle aufweisen, verbindbar sein sollen enthalten eine zur Steuereinheitsschnittstelle korrespondierende Schnittstelle, zum Beispiel ebenfalls eine RS-232 Schnittstelle.

Daraus resultiert einerseits, dass jeweils auf der Seite des Schweißbrenners und der Steuereinheit zwei Schnittstellen vorgesehen sein können, wenn sowohl Brennertaster als auch brennerseitige Komponenten, die für die Kommunikation mit der Steuereinheit des Schweißgeräts eine Datenschnittstelle auf Seiten des Schweißbrenners erforderlich machen, z.B. Eingabevorrichtungen oder Ausgabevorrichtungen, mit der Steuereinheit verbunden werden sollen. Andererseits ist es möglich, Schweißbrenner bereitzustellen, bei denen auch der Brennertaster brennerseitig über eine Datenschnittstelle mit der Steuereinheit eines Schweißgeräts verbunden werden kann. Auf eine der Brennertasterschnittstelle angepasste Steuereinheitsschnittstelle kann dann verzichtet werden. Es kann ausreichen, eine der Datenschnittstelle des Schweißbrenners angepasste Steuereinheitsschnittstelle vorzusehen. Allerdings können Schweißbrenner, welche nur über eine herkömmliche Brennertasterschnittstelle verfügen, dann nicht mehr mit der Steuereinheitsschnittstelle verbunden werden.

Aus dem Stand der Technik EP 0 854 006 A1 ist ein Schweißgerät bekannt, das einen Schweißbrenner und eine Steuer- und Versorgungseinheit umfasst. Zur Verbindung des Schweißbrenners mit der Steuer- und Versorgungseinheit ist seitens der Steuer- und Versorgungseinheit eine Buchse vorgesehen, während der Schweißbrenner einen korrespondierenden Stecker aufweist. Stecker und Buchse sind über ein Leitungssystem verbunden. Zum Starten eines Schweißvorgangs ist an dem Schweißbrenner ein Druckschalter vorgesehen.

Eine derartige Verbindung zu einem Schweißbrenner ist auch aus der US 2011/0220616 A1 bekannt. Der in dieser Druckschrift offenbarte Schweißbrenner umfasst ein Benutzerschnittstellenmodul mit mehreren Bedienknöpfen, über die Parameter eingestellt werden können, und ein Display.

Die US 2007/0056934 A1 lehrt ein Schweißgerät, bei dem eine Stromquelle über ein Kabel mit einem Schweißbrenner verbunden ist. Das Kabel umfasst einen Leiter ohne eigene elektrische Isolation sowie mindestens eine davon isolierte Steuerader.

Leiter und Steuerader sind von einer äußeren, nicht leitenden Schicht umgeben.

Es ist eine Aufgabe der vorliegenden Erfindung, die Verbindungsmöglichkeiten zwischen Schweißbrennern und Steuereinheiten für Schweißgeräte zu verbessern.

Erfindungsgemäß wird diese Aufgabe bei einer Steuereinheit für ein Schweißgerät der eingangs genannten Art dadurch gelöst, dass die Steuereinheitsschnittstelle alternativ sowohl mit einer Brennertasterschnittstelle eines Schweißbrenners als auch mit einer Datenschnittstelle eines Schweißbrenners verbindbar ist. Die Steuereinheit umfasst Erkennungsmittel zum Erkennen, ob die Steuereinheitsschnittstelle mit einer Brennertasterschnittstelle eines Schweißbrenners oder mit einer Datenschnittstelle eines Schweißbrenners verbunden ist, und Kommunikationsmittel für die Kommunikation der Steuereinheit über die Steuereinheitsschnittstelle und die Brennertasterschnittstelle eines Schweißbrenners sowie für die Kommunikation der Steuereinheit über die Steuereinheitsschnittstelle und eine Datenschnittstelle eines Schweißbrenners.

Da die Steuereinheitsschnittstelle alternativ sowohl mit einer Brennertasterschnittstelle eines Schweißbrenners als auch mit einer Datenschnittstelle eines Schweißbrenners verbindbar ist, kann ermöglicht werden, dass einerseits Schweißbrenner mit der Steuereinheitsschnittstelle verbunden werden können, die nur über eine Brennertasterschnittstelle verfügen. Andererseits können auch solchen Schweißbrenner mit der Steuereinheitsschnittstelle verbunden werden, die über eine Datenschnittstelle verfügen. Somit kann eine gesteigerte Flexibilität bezüglich des Anschlusses von Schweißbrennern erreicht werden. Ältere Brenner ohne Datenschnittstelle können zusammen mit modernen Schweißgeräten, die eine erfindungsgemäße Steuereinheit enthalten, weiterhin verwendet werde. Die Notwendigkeit von Neuanschaffungen kann verzögert werden. Dies ist ökonomisch und ökologisch sinnvoll. Die angesprochene Flexibilität wird ermöglicht, ohne dass hierfür zwei verschiedene Steuereinheitsschnittstellen vorgesehen werden müssten.

Der Einfachheit halber werden hier stets das Schweißen und das Löten unter der Bezeichnung Schweißen zusammengefasst. Entsprechend wird unter einem Schweißgerät auch ein Gerät zum Löten verstanden.

Ein Schweißgerät, für das eine erfindungsgemäße Steuereinheit vorgesehen ist, kann unterschiedlichen Typen von Schweißgeräten angehören. Es kann sich - um nur einige Beispiele zu nennen - um einen Laserschweißgerät oder um ein Lichtbogenschweißgerät handeln. Zu den Lichtbögenschweißverfahren gehören beispielsweise das Plasmaschweißen, das Wolfram-Inertgasschweißen (WIG-Schweißen) und das Metallschutzgasschweißen (MSG-Schweißen). Letztere Gruppe von Verfahren ist mit dem Metall-Inertgasschweißen (MIG-Schweißen) und dem Metall-Aktivgasschweißen (MAG-Schweißen)in zwei grundlegende Verfahrensarten untergliederbar.

Eine erfindungsgemäße Steuereinheit kann beim Steuervorgang z.B. durch Befehle eines Bedieners oder vom Wert bestimmter Parameter des Schweißprozesses in ihrem Steuerverhalten beeinflusst werden. Dazu kann die Steuereinheit mit der Fähigkeit, eine Regelung bestimmter Schweißparameter durchzuführen, ausgestattet sein. Zu diesem Zweck kann sie Messmittel zur Erfassung des Werts von Schweißparametern beinhalten, so dass das Überwachen des Prozesses möglich wird. Wenn hier von einer Steuereinheit die Rede ist, ist stets auch eine Einheit mit Reglungsfähigkeiten von diesem Begriff umfasst.

Bei einer erfindungsgemäßen Steuereinheit kann sich um jede beliebige Steuereinheit handeln, die in Zusammenhang mit einem Schweißprozess Steueraufgaben übernimmt. Für eine erfindungsgemäße Steuereinheit beispielsweise eines Lichtbogenschweißgeräts ist die Steuerung des Leistungsteils des Lichtbogenschweißgeräts eine typische Aufgabe. Auf Veranlassung der Steuereinheit kann so z.B. ein bestimmter Strom- oder Spannungsverlauf erzielt werden. Eine Lichtbogenzündung kann - etwa als Reaktion auf die Betätigung des Brennertasters - ausgelöst werden. Die Steuereinheit kann jedoch auch andere Steueraufgaben als die Steuerung eines Leistungsteils übernehmen. So kann sie etwa eine Drahtvorschubvorrichtung steuern, die Steuerung des Gasstroms beim Schutzgasschweißen übernehmen oder auch die Kühlung des Schweißgeräts steuern um nur einige weitere Beispiele zu nennen.

Die Steuereinheit unterliegt keinerlei Beschränkungen bezüglich der Komponenten, aus denen sie besteht. Zum Beispiel kann sie einen Mikroprozessor umfassen, der die nötigen Steueroperationen vornimmt und dazu auf einen Speicher, beispielsweise einen Flash-Speicher, zurückgreift, in dem die genaue Art und Reihenfolge der auszuführenden Steueroperationen hinterlegt ist. Alternativ sind der Einsatz einer anwendungsspezifischen integrierten Schaltung (application specific integrated circuit - ASIC), eines Field Programmable Gate Array (FPGA) oder beliebige andere Lösungen denkbar.

Unter einer Steuereinheitsschnittstelle wird im Kontext der Erfindung zur Abgrenzung gegenüber einer Softwareschnittstelle eine Hardwareschnittstelle - anders ausgedrückt eine physikalische Schnittstelle - für die drahtgebundene Kommunikation verstanden. Dabei wird der Begriff der Kommunikation hier stets als Oberbegriff verstanden, der sowohl die unidirektionale Informationsübertragung als auch den bidirektionalen Datenaustausch erfasst. Die Informationsübertragung kann analog oder digital erfolgen. Dass es sich bei der Steuereinheitsschnittstelle um eine Hardwareschnittstelle handelt, bedeutet jedoch nicht, dass keine speziellen Softwarekomponenten und Softwareschnittstellen vorhanden sein dürfen, um die Kommunikation über die Steuereinheitsschnittstelle und die Brennertasterschnittstelle bzw. über die Steuereinheitsschnittstelle und die Datenschnittstelle zu ermöglichen. Es wird lediglich festzuhalten, dass der Ausdruck Steuereinheitsschnittstelle hier eine Hardwareschnittstelle bezeichnet. Eine Steuereinheitsschnittstelle in diesem Sinn kann insbesondere dem Zweck dienen, eine physikalische Verbindung zwischen ihr und einer weiteren Schnittstelle, wie einer Brennertasterschnittstelle oder einer Datenschnittstelle eines Schweißbrenners, herzustellen. Dazu kann die Steuereinheitsschnittstelle mittels eines Kabels, welches einen oder mehrere Leiter enthält, und gegebenenfalls mittels geeigneter Stecker mit einer Brennertasterschnittstelle bzw. einer Datenschnittstelle eines Schweißbrenners verbunden werden. Auf diese Weise wird die Kommunikation der Steuereinheit über die Steuereinheitsschnittstelle und die Brennertasterschnittstelle eines Schweißbrenners mit dem Brennertaster bzw. über die Steuereinheitsschnittstelle und die Datenschnittstelle eines Schweißbrenners mit an die Datenschnittstelle angebundenen Komponenten ermöglicht. Einige der maßgebliche Eigenschaften der Steuereinheitsschnittstelle können ihre Geometrie, insbesondere ihr Querschnittsgeometrie, falls zur Verbindung Stecker eingesetzt werde, die Anzahl und Anordnung ihrer Kontaktstifte (engl. Pins) bzw. der entsprechenden Kontaktaufnahmen sowie Anzahl, Querschnitt und elektrische Eigenschaften der mit der Steuereinheitsschnittstelle verbindbaren Leiter. Ferner zählen die für solche Leiter an der Steuereinheitsschnittstelle eventuell vorgesehenen Befestigungsmittel zu diesen Eigenschaften. Dabei kann es sich z.B. um Bohrungen für Schrauben, mittels derer Kabelschuhe befestigt werden können, handeln.

Die obigen Ausführungen zur Steuereinheitsschnittstelle gelten analog auch für die Brennertasterschnittstelle. Insbesondere bezeichnet auch der Begriff der Brennertasterschnittstelle eine Hardwareschnittstelle. Indem sie die Verbindung von Brennertaster und Steuereinheitsschnittstelle ermöglicht, erlaubt sie, der Steuereinheit Informationen über die Betätigung des Brennertasters zukommen zu lassen. Üblicherweise weist die Brennertasterschnittstelle lediglich zwei Leiteranschlüsse auf und es erfolgt eine Informationsübertragung vom Brennertaster zur Steuereinheitsschnittstelle, nicht aber in der Gegenrichtung, da eine Informationsauswertung durch den Brennertaster gewöhnlich nicht möglich ist.

Auch für die Datenschnittstelle sind die Ausführungen zur Steuereinheitsschnittstelle analog gültig. Insbesondere bezeichnet auch der Begriff der Datenschnittstelle eine Hardwareschnittstelle. Indem sie die Verbindung von an die Datenschnittstelle angebundenen Komponenten mit der Steuereinheitsschnittstelle ermöglicht, erlaubt sie den Datenaustausch von Steuereinheit und an die Datenschnittstelle angeschlossenen Komponenten.

Diese Komponenten können beispielsweise Anzeigemittel und/oder Eingabemittel umfassen. Die Anzeigemittel können der Anzeige von Informationen dienen. Diese können über die Steuereinheit des Schweißgeräts, mit dem der Schweißbrenner, welcher die Anzeigemittel umfasst, über seine Datenschnittstelle und die Steuereinheitsschnittstelle des Schweißgeräts verbunden ist, zu den Anzeigemitteln übertragen werden. Bei den Informationen kann es sich zum Beispiel um Werte eines order mehrerer aktueller Parameter, die mit einem Schweißprozess in Verbindung stehen, handeln. Zu den Parametern können etwa eine Schweißstromstärke, eine Schweißspannung, eine Drahtvorschubgeschwindigkeit, eine verwendete Schweißstrompulsform, die Dauer eines Schweißvorgangs, die Temperatur eines Kühlmittels für die Brennerkühlung und viele weiter Parameter zählen. Die Anzeigemittel können zum Beispiel einen Bildschirm umfassen. Denkbar ist unter anderem der Einsatz einer Flüssigkristallanzeige (liquid chrystal display - LCD) oder eines mittels Leuchtdioden (light-emitting diodes - LED) aufgebauten Bildschirms.

Die Eingabemittel können der Eingabe von Informationen, insbesondere von Befehlen oder Vorgaben des Bedieners des Schweißgeräts, dienen. Die Eingabemittel können die Funktionen übernehmen, das Auslösen eines Schweißvorgangs einzuleiten, und somit einen Brennertaster ersetzen. Ebenso kann es möglich sein, dass der Bediener über brennerseitige Eingabemittel den Wert von Parametern wie unter anderem der Schweißstromstärke, der Schweißspannung oder der Drahtvorschubgeschwindigkeit vorgeben kann. Zudem kann vorgesehen sein, dass die Auswahl einer zu verwendenden Schweißstrompulsform durch die Eingabemittel vorgenommen werden kann. Die Eingabemittel können zum Beispiel eine oder mehrer Tasten, Drehknöpfe, Schieber oder Hebel umfassen. Ein Touchscreen stellt in sowohl ein Eingabe- als auch ein Ausgabemittel dar. Er kann daher eine besonders platzsparende und somit für den Einsatz in einen Schweißbrenner vorteilhafte Option darstellen.

Dass die Steuereinheitsschnittstelle alternativ sowohl mit einer Brennertasterschnittstelle eines Schweißbrenners als auch mit einer Datenschnittstelle eines Schweißbrenners verbindbar ist bedeutet, dass sie geeignet ist, sowohl mit einer Brennertasterschnittstelle als auch mit einer Datenschnittstelle verbunden zu werden. Soll von beiden Optionen Gebrauch gemacht werden, ist dies nur nacheinander möglich. Die Steuereinheitsschnittstelle ist nicht gleichzeitig mit zwei verschiedenen Schnittstellen verbindbar.

Gemäß einem Ausführungsbeispiel ist die Steuereinheitsschnittstelle mit einer herkömmlichen Brennertasterschnittstelle verbindbar. Insbesondere kann die erfindungsgemäße Steuereinheitsschnittstelle äußerlich wie eine herkömmliche, für die Verbindung mit einer herkömmlichen Brennertasterschnittstelle ausgestaltete Steuereinheitsschnittstelle beschaffen sein.

Ist die Steuereinheitsschnittstelle der Steuereinheit eines Schweißgeräts mit einer herkömmlichen Brennertasterschnittstelle verbindbar, kann dies als Anpassung der Steuereinheitsschnittstelle an die Brennertasterschnittstelle aufgefasst werden. Da erfindungsgemäß die Steuereinheitsschnittstelle alternativ sowohl mit einer Brennertasterschnittstelle eines Schweißbrenners als auch mit einer Datenschnittstelle eines Schweißbrenners verbindbar ist, bedeutet dies im Umkehrschluss, dass bei einer mit der Steuereinheitsschnittstelle verbindbaren Datenschnittstelle eines Schweißbrenners eine Angleichung dieser Datenschnittstelle an die herkömmliche Brennertasterschnittstelle erfolgt ist. In diesem Fall kann es ausreichen, bei einer Steuereinheit für ein Schweißgerät lediglich eine Steuereinheitsschnittstelle bereitzustellen, welche mit herkömmlichen Brennertasterschnittstellen verbindbar ist. Die Verbindbarkeit mit den vorstehend beschriebenen Datenschnittstellen ist dann automatisch gegeben. Es kann für die Verbindung der Steuereinheitsschnittstelle mit der Brennertasterschnittstelle dasselbe Kabel wie für die Verbindung der Steuereinheitsschnittstelle mit der Datenschnittstelle verwendet werden.

Gemäß einem Ausführungsbeispiel umfasst die Steuereinheitsschnittstelle maximal zwei Leiteranschlüsse zur Verbindung mit einer Brennertasterschnittstelle eines Schweißbrenners bzw. einer Datenschnittstelle eines Schweißbrenners.

Bei herkömmlichen Schweißgeräten und Schweißbrennern ist häufig vorgesehen, dass die Verbindung eines Brennertasters eines solchen herkömmlichen Schweißbrenners mit der Steuereinheit eines solchen herkömmlichen Schweißgeräts über maximal zwei Leiter, insbesondere genau zwei Leiter, vorgenommen wird. Mit anderen Worten ist in diesen Fällen die Brennertasterschnittstelle eingerichtet, mit maximal zwei Leitern, insbesondere genau zwei Leitern, verbunden zu werden. Diese dienen als Hin- und Rückleiter für die vom Brennertaster ausgehenden Signale. Umfasst die Steuereinheitsschnittstelle der Steuereinheit eines Schweißgeräts maximal zwei Leiteranschlüsse, kann sie dementsprechend mit einer herkömmlichen Brennertasterschnittstelle eines herkömmlichen Schweißbrenners verbindbar sein.

Gegenüber dem Stand der Technik, der vorsieht, eine Verbindung von einer Steuereinheitsschnittstelle eines Schweißgeräts und einer Datenschnittstelle eines Schweißbrenners über mehr als zwei Leiter herzustellen, können bei diesem Ausführungsbeispiel durch die Verwendung von maximal zwei Leitern Materialkosten eingespart werden. Zusätzlich kann die Verbindung zwischen der Steuereinheitsschnittstelle und einer Datenschnittstelle eines Schweißbrenners dadurch dünner, leichter und mechanisch flexibler sein. Insbesondere kann ein Schlauchpaket, in dem die maximal zwei mit der Steuereinheitsschnittstelle verbunden Leiter und gegebenenfalls weitere Komponenten wie ein Schutzgaszuleitung oder eine Schweißdrahtzuführung angeordnet sind, dünner, leichter und mechanisch flexibler sein.

Dass die Steuereinheitsschnittstelle maximal zwei Leiteranschlüsse zur Verbindung mit einer Brennertasterschnittstelle eines Schweißbrenners bzw. einer Datenschnittstelle eines Schweißbrenners umfasst, bedeutet nicht, dass überhaupt keine weiteren Leiter zu einem Schweißbrenner führen dürfen, welcher mit einer erfindungsgemäßen Steuereinheit verbunden ist. So können beispielsweise zusätzlich von einem Leistungsteil elektrische Leiter zur Energieversorgung des Schweißprozesses zum Schweißbrenner führen. Lediglich die Steuereinheitsschnittstelle darf über maximal zwei Leiter mit einer Brennertasterschnittstelle oder Datenschnittstelle eines Schweißbrenners verbunden sein.

Gemäß einem Ausführungsbeispiel umfasst die Steuereinheitsschnittstelle lediglich einen Leiteranschluss zur Verbindung mit einer Brennertasterschnittstelle eines Schweißbrenners bzw. einer Datenschnittstelle eines Schweißbrenners.

Ein Leiteranschluss kann ausreichen, wenn ein Rückleiter, der die Steuereinheitsschnittstelle und eine Brennertasterschnittstelle oder Datenschnittstelle eines Schweißbrenners miteinander verbindet überflüssig ist. Zum Beispiel kann sowohl auf der Seite der Steuereinheit als auch auf der Seite des Schweißbrenners, der die zu verbindende Schnittstelle aufweist, ein gemeinsames Bezugspotential zur Verfügung stehen - etwa weil bereits für andere Zwecke ein Masseanschluss vorhanden ist. Die Verbindung der Steuereinheitsschnittstelle mit der Brennertasterschnittstelle bzw. Datenschnittstelle kann bei nur einem Leiter ganz besonders dünn, leicht und flexibel gestaltet werden.

Gemäß einem Ausführungsbeispiel ist vorgesehen, dass die Steuereinheit Energieversorgungsmittel zur Energieversorgung eines Stromkreises eines Brennertasters eines Schweißbrenners umfasst.

Es ist üblich, dass die Mittel zur Energieversorgung für einen Brennertasterstromkreis nicht im Schweißbrenner selbst angeordnet sind, sondern in anderen Schweißgerätkomponenten, bei Lichtbogenschweißgeräten insbesondere auf der Seite des Leistungsteils, zu finden sind. Sollen Schweißbrenner ohne Mittel zur Energieversorgung des Brennertasterstromkreises zusammen mit einem Schweißgerät verwendet werden, welches eine erfindungsgemäße Steuereinheit aufweist, kann dies wegen des Vorsehens der Energieversorgungsmittel ohne Umrüstung des Schweißbrenners erfolgen.

Die Energieversorgungsmittel können zum Beispiel als Spannungsquelle oder als Stromquelle ausgestaltet sein.

Die Energieversorgungsmittel können zudem zur Energieversorgung einer mit einer Datenschnittstelle eines Schweißbrenners verbundenen Komponente dienen, wenn die Datenschnittstelle mit der Steuereinheitsschnittstelle verbunden ist. Bei der Komponente kann es sich beispielsweise um Anzeigemittel oder Eingabemittel handeln. Bei diesem Ausführungsbeispiel müssen seitens des Schweißbrenners keine Mittel für die Energieversorgung der Komponente vorgesehen werden. Dies kann sicherstellen, dass der Schweißbrenner leicht und daher gut handhabbar ist. Es können mehrere mit der Datenschnittstelle verbundene Komponenten von den Energieversorgungsmitteln versorgt werden.

Erfindungsgemäß umfasst die Steuereinheit Erkennungsmittel zum Erkennen, ob die Steuereinheitsschnittstelle mit einer Brennertasterschnittstelle eines Schweißbrenners oder mit einer Datenschnittstelle eines Schweißbrenners verbunden ist, und Kommunikationsmittel für die Kommunikation der Steuereinheit über die Steuereinheitsschnittstelle und die Brennertasterschnittstelle eines Schweißbrenners sowie für die Kommunikation der Steuereinheit über die Steuereinheitsschnittstelle und eine Datenschnittstelle eines Schweißbrenners.

Nach dem Durchführen einer Erkennungsprozedur kann der Steuereinheit bekannt sein, ob die Steuereinheitsschnittstelle mit einer Brennertasterschnittstelle eines Schweißbrenners oder einer Datenschnittstelle eines Schweißbrenners verbunden ist. Sie kann ihr Kommunikationsverhalten daran anpassen. So kann die Steuereinheit, wenn die Verbindung mit der Brennertasterschnittstelle eines Schweißbrenners erkannt wurde, sich beispielsweise darauf einrichten, lediglich Informationen über die Brennertasterschnittstelle zu empfangen, nicht aber Informationen über die Brennertasterschnittstelle an den Brennertaster zu senden, denn diese können üblicherweise dort nicht verarbeitet werden. Zudem kann die Erkennung erlauben, festzulegen, wie über die Steuereinheitsschnittstelle empfangene Informationen seitens der Steuereinheit zu verarbeiten sind. Ist zum Beispiel die Steuereinheitsschnittstelle mit der Brennertasterschnittstelle eines Schweißbrenners verbunden, kann es nur eine einzige korrekte Interpretation der über die Steuereinheitsschnittstelle empfangenen Signale geben: Ein Stromfluss bedeutet, dass der Brennertaster betätigt wird, während kein Stromfluss bedeutet, dass er nicht betätigt wird - oder umgekehrt. Eine Interpretation von über die Steuereinheitsschnittstelle empfangenen Signalen zum Beispiel als Informationen zur Fehlerkorrektur, wie sie in einigen Übertragungsprotokollen vorgesehen sind, kann dagegen verfehlt sein und zu einer falschen Reaktion der Steuereinheit führen. Stammen die über die Steuereinheitsschnittstelle empfangenen Signale jedoch von einer Datenschnittstelle eines Schweißbrenners, kann eine solche Interpretation notwendig sein, wenn sie in dem verwendeten Übertragungsprotokoll vorgesehen ist. Darüber hinaus kann auch hinsichtlich anderer Aspekte eine unterschiedliche Interpretation der Signale erforderlich sein. Beispielsweise können über die Datenschnittstelle eines Schweißbrenners Datenwörter einer bestimmten Wortlänge, zum Beispiel 8 Bit, übertragen werden. Dann ist auch empfängerseitig, d.h. in der Steuereinheit, eine wortweise Auswertung der empfangenen Signale geboten.

Es kann die Aufgabe der Kommunikationsmittel sein, die tatsächliche Durchführung der Kommunikation zu ermöglichen. Zu diesem Zweck können die Kommunikationsmittel über Strommessmittel verfügen, die ermitteln können, ob ein Strom fließt oder nicht und somit in der Lage sind festzustellen, ob ein Brennertaster betätigt wurde. Diese Strommessmittel können ebenso der Messung elektrischer Signale dienen, welche von einer Datenschnittstelle eines Schweißbrenners stammen. Hier kann gegebenenfalls auch die Stromstärke informationstragend sein und nicht nur der Umstand, ob überhaupt ein Stromfluss feststellbar ist. Die Kommunikationsmittel können weiterhin Mittel enthalten, die der Verstärkung eingehender Signale, der Umsetzung von eingehenden Signalen in Signale, die von anderen Komponenten der Steuereinheit weiterverarbeitet werden können, der Generierung und/oder Verstärkung von Signalen, die über die Steuereinheitsschnittstelle an eine Datenschnittstelle eines Schweißbrenners übertragen werden sollen, der Extraktionen von Nutzdaten aus von einer Datenschnittstelle empfangenen Daten, die zusätzliche Protokolldaten enthalten, oder dem Hinzufügen von Protokolldaten zu Nutzdaten, die die Steuereinheit an eine solche Datenschnittstelle übertragen möchte, dienen. Weitere für die Kommunikation benötige Mittel können ebenfalls in den Kommunikationsmitteln enthalten sein. Die Kommunikationsmittel können verschiedene Übertragungsprotokolle beherrschen und einsetzen. Beispielsweise kann ein Busprotokoll wie das CAN-Protokoll (CAN = Controller Area Network) verwendet werden.

Dadurch, dass die Erkennungsmittel und die Kommunikationsmittel vorgesehen sind, kann trotz der Möglichkeit, die Steuereinheitsschnittstelle alternativ sowohl mit einer Brennertasterschnittstelle eines Schweißbrenners als auch mit einer Datenschnittstelle eines Schweißbrenners zu verbinden, eine funktionierende Kommunikation zwischen der Steuereinheitsschnittstelle einerseits sowie der Brennertasterschnittstelle und der Datenschnittstelle andererseits möglich sein. Die Erkennungsmittel und die Kommunikationsmittel können als getrennte Module oder als ein gemeinsames Modul ausgestaltet sein. Beispielsweise können sie in Form eines gemeinsamen integrierten Schaltkreises vorliegen. Ebenso kann ein Bauteil gleichzeitig Funktionen der Erkennungsmittel, der Kommunikationsmittel und Steuerfunktionen, zum Beispiel die Steuerung des Leistungsteils eines Lichtbogenschweißgeräts, ausüben.

Gemäß-einem Ausführungsbeispiel sind die Erkennungsmittel eingerichtet, zum Erkennen, ob die Steuereinheitsschnittstelle mit einer Brennertasterschnittstelle eines Schweißbrenners oder mit einer Datenschnittstelle eines Schweißbrenners verbunden ist, die Kommunikationsmittel zu veranlassen, ein Erkennungssignal über die Steuereinheitsschnittstelle zu senden.

Ist die Steuereinheitsschnittstelle mit einer Brennertasterschnittstelle eines Schweißbrenners verbunden, ist keine Antwort auf das Erkennungssignal zu erwarten. Ein Brennertaster ist üblicherweise nicht eingerichtet, Inforationsübertragungen zu empfangen. Dagegen kann an eine Datenschnittstelle eines Schweißbrenners eine Komponente - z.B. ein Kommunikationsmodul - angebunden sein, welche das Erkennungssignal empfängt, auswertet und ein Antwortsignal zurück in Richtung der Steuereinheitsschnittstelle absetzt. Die Erkennungsmittel können das Antwortsignal über die Kommunikationsmittel empfangen und prüfen, ob es sich um das Antwortsignal oder um ein beliebiges, von der Betätigung eines Brennertasters herrührendes Signal handelt. Wurde das Antwortsignal erkannt, kann die Steuereinheit ihr Kommunikationsverhalten auf die Kommunikation über eine Datenschnittstelle einstellen. Anderenfalls kann sie ihr Kommunikationsverhalten auf die Kommunikation über eine Brennertasterschnittstelle einstellen. Es kann vorgesehen sein, dass in dem Antwortsignal Informationen über die Datenschnittstelle und/oder mit der Datenschnittstelle verbundene Komponenten und/oder andere Eigenschaften des Schweißbrenners enthalten sind. Es können auch Informationen enthalten sein, die für die erfolgreiche Kommunikation über die Datenschnittstelle notwendig sind. Dabei kann es sich z.B. um Informationen über ein verwendetes Übertragungsprotokoll oder um Adressierungsinformationen handeln.

Gemäß einem Ausführungsbeispiel sind die Kommunikationsmittel und die Energieversorgungsmittel der Steuereinheitsschnittstelle zugeordnet.

Bei diesem Ausführungsbeispiel können nicht nur die Kommunikation zwischen der Steuereinheit und einem Brennertaster bzw. zwischen der Steuereinheit und einer mit einer Datenschnittstelle eines Schweißbrenners verbundenen Komponente über die Steuereinheitsschnittstelle erfolgen, sondern auch die Energieversorgung eines Brennertasterstromkreises bzw. der Komponente. Insbesondere können bei diesem Ausführungsbeispiel die Schnittstellen verbindende Leiter der Kommunikation und der Übertragung von elektrischer Energie zur Energieversorgung dienen. Auf diese Weise können Leiter eingespart werden, was die Dicke, das Gewicht und die mechanische Flexibilität der Verbindung zum Schweißbrenner positiv beeinflussen kann.

Die Zuordnung der Kommunikationsmittel und der Energieversorgungsmittel zu der Steuereinheitsschnittstelle kann z.B. umgesetzt werden, indem die Kommunikationsmittel und die Energieversorgungsmittel so angeordnet werden, dass sie in einen bei Verbindung der Steuereinheitsschnittstelle mit einer Schnittstelle eines Schweißbrenners entstehenden Stromkreis eingeschleift sind. Sie können parallel oder in Serie zu der Brennertasterschnittstelle bzw. der Datenschnittstelle geschaltet sein. Die Erkennungsmittel können ebenfalls der Steuereinheitsschnittstelle zugeordnet sein.

Gemäß einem Ausführungsbeispiel sind die Kommunikationsmittel eingerichtet, über die Steuereinheit zu sendende Informationssignale einer von den Energieversorgungsmitteln bereitgestellten Spannung bzw. einem von den Energieversorgungsmitteln bereitgestellten Strom zu überlagern.

Zusätzliche Leiteranschlüsse bei der Steuereinheitsschnittstelle und bei damit zu verbindenden Brennertasterschnittstellen bzw. Datenschnittstellen für die Energieübertragung - und dementsprechend zusätzliche Leiter für die Verbindung - können nach diesem Ausführungsbeispiel unnötig sein. Es können dieselben Leiter für die Informations- und die Energieübertragung genutzt werden. Aufgrund der Überlagerung kann dies gleichzeitig geschehen. Somit kann die Informationsübertragung ohne Unterbrechung der Energieversorgung möglich sein.

Die Überlagerung kann zum Beispiel durch Addition einer von den Energieversorgungsmitteln bereitgestellten Versorgungsspannung und der Spannung eines Informationssignals geschehen. Ebenso kann die Überlagerung durch Addition eines von den Energieversorgungsmitteln bereitgestellten Versorgungsstroms und der Stromstärke eines Informationssignals geschehen.

Es kann vorgesehen sein, dass die Überlagerung so durchgeführt wird, dass nach der Überlagerung der Betrag der Spannung bzw. Stromstärke stets größer oder gleich dem Betrag der Versorgungsspannung bzw. dem Betrag der Versorgungsstromstärke ist. Dazu kann insbesondere das Vorzeichen der überlagerten Spannung bzw. des überlagerten Stroms entsprechend gewählt werden. Auf diese Weise kann sichergestellt werden, dass auch bei einem überlagerten Informationssignal der Betrag der Versorgungsspannung bzw. der Betrag der Versorgungsstromstärke nie unterschritten wird und eine ausreichende Energieversorgung gewährleistet ist.

Bei einem erfindungsgemäßer Schweißbrenner mit einer Datenschnittstelle, der mit einer vorstehend beschriebenen, erfindungsgemäßen Steuereinheitsschnittstelle einer Steuereinheit für ein Schweißgerät verbindbar ist, ist eine besondere Gestaltung der Datenschnittstelle gegeben. Da die Steuereinheitsschnittstelle einer erfindungsgemäßen Steuereinheit alternativ sowohl mit einer Brennertasterschnittstelle eines Schweißbrenners als auch mit einer Datenschnittstelle eines Schweißbrenners verbindbar ist, ist eine spezielle, an die Steuereinheitsschnittstelle angepasste Datenschnittstelle nötig.

Beispielsweise kann die Steuereinheitsschnittstelle mit einer herkömmlichen Brennertasterschnittstelle verbindbar sein. Insbesondere kann die Steuereinheitsschnittstelle äußerlich wie eine herkömmliche, für die Verbindung mit einer herkömmlichen Brennertasterschnittstelle ausgestaltete Steuereinheitsschnittstelle beschaffen sein. Damit auch die Datenschnittstelle mit der Steuereinheitsschnittstelle verbindbar ist, kann die die Datenschnittstelle wie eine herkömmliche Brennertasterschnittstelle gestaltet sein.

Gemäß einem Ausführungsbeispiel umfasst die Datenschnittstelle maximal zwei Leiteranschlüsse zur Verbindung mit der Steuereinheitsschnittstelle. Insbesondere können genau zwei Leiteranschlüsse vorgesehen sein.

Eine Verbindung mit einer Steuereinheitsschnittstelle, die eine entsprechende Anzahl an Leiteranschlüssen aufweist, kann auf diesem Weg ermöglicht werden. Im Stand der Technik ist es üblich, für die Verbindung einer Steuereinheitsschnittstelle mit einer Brennertasterschnittstelle bei jeder der Schnittstellen zwei Leiteranschlüsse vorzusehen. Umfasst die Datenschnittstelle maximal zwei Leiteranschlüsse, insbesondere genau zwei Leiteranschlüsse, kann sie dementsprechend mit einer Steuereinheitsschnittstelle, die mit einer herkömmlichen Brennertasterschnittstelle verbindbar ist, verbindbar sein.

Gemäß einem Ausführungsbeispiel umfasst die Datenschnittstelle lediglich einen Leiteranschluss zur Verbindung mit der Steuereinheitsschnittstelle.

Ein Leiteranschluss kann ausreichen, wenn ein Rückleiter, der die Steuereinheitsschnittstelle und die Datenschnittstelle miteinander verbindet, überflüssig ist, weil ein gemeinsames Bezugspotential zur Verfügung steht - etwa durch einen bereits für andere Zwecke vorhandenen Masseanschluss.

Von einer Ausführungsform des erfindungsgemäßen Schweißbrenners umfasste Verbindungsmittel zum Verbinden einer Steuereinheitsschnittstelle einer erfindungsgemäßen Steuereinheit einerseits und einer Brennertasterschnittstelle eines Schweißbrenners oder einer Datenschnittstelle eines Schweißbrenners, insbesondere eines erfindungsgemäßen Schweißbrenners, andererseits umfassen einen für die Verbindung der Steuereinheitsschnittstelle mit der Brennertasterschnittstelle bzw. mit der Datenschnittstelle vorgesehenen inneren Leiter und einen diesen umgebenden Leiter für die Energieversorgung eines Schweißprozesses.

Solche Verbindungsmittel können augrund optimaler Raumausnutzung besonders kompakt aufgebaut sein. Sie können eine vergleichsweise geringe Dicke aufweisen. Diese kann mit einer erhöhten mechanischen Flexibilität der Verbindungsmittel einhergehen.

Die Verbindungsmittel können beispielweise als Schlaupaket ausgestaltet sein. Der umgebende Leiter kann in seinem Inneren hohl sein. Es können auch mehrere innere Leiter in dem umgebenden Leiter vorgesehen sein. Neben den angesprochenen Leitern können auch weitere Komponenten, z.B. zur Führung eines Schweißdrahts, innerhalb des umgebenden Leiters angeordnet sein.

Gemäß einem Ausführungsbeispiel ist das Innere des umgebenden Leiters zur Führung eines Schutzgasstroms vorgesehen.

Ein zusätzlicher Schlauch für die Schutzgaszufuhr zum Schweißen unter Schutzgas kann bei diesem Ausführungsbeispiel unnötig sein. Das Innere des umgebenden Leiters kann dessen Funktion übernehmen. Daher können die Verbindungsmittel noch kompakter aufgebaut sein. Der Schutzgastrom kann zumindest in Schweißbetrieb als Isolierung zwischen dem inneren Leiter und dem umgebenden Leiter wirken. Eine Isolierung durch den Schutzgasstrom nur im Schweißbetrieb kann ausreichen.

Die Erfindung wird im Folgenden anhand von vier Figuren näher erläutert:
- Fig. 1: eine schematische Darstellung eines ersten MSG-Schweißgeräts mit einer erfindungsgemäßen Steuereinheit und einem Schweißbrenner mit einer Brennertasterschnittstelle;
- Fig. 2: eine schematische Darstellung eines zweiten MSG-Schweißgeräts mit der Steuereinheit aus Fig. 1 und einem erfindungsgemäßen Schweißbrenner mit einer Datenschnittstelle;
- Fig. 3: eine schematische Darstellung eines Spannungsverlaufs bei der Datenübertragung von der Steuereinheit aus Fig. 1 und Fig. 2 zur Datenschnittstelle aus Fig. 2;
- Fig. 4: eine schematische Darstellung eines Querschnitts eine Schlauchpakets zum Verbinden der Steuereinheitsschnittstelle der Steuereinheit aus Fig. 1 und Fig. 2 einerseits und der Brennertasterschnittstelle aus Fig. 1 oder der Datenschnittstelle aus Fig. 2 andererseits.

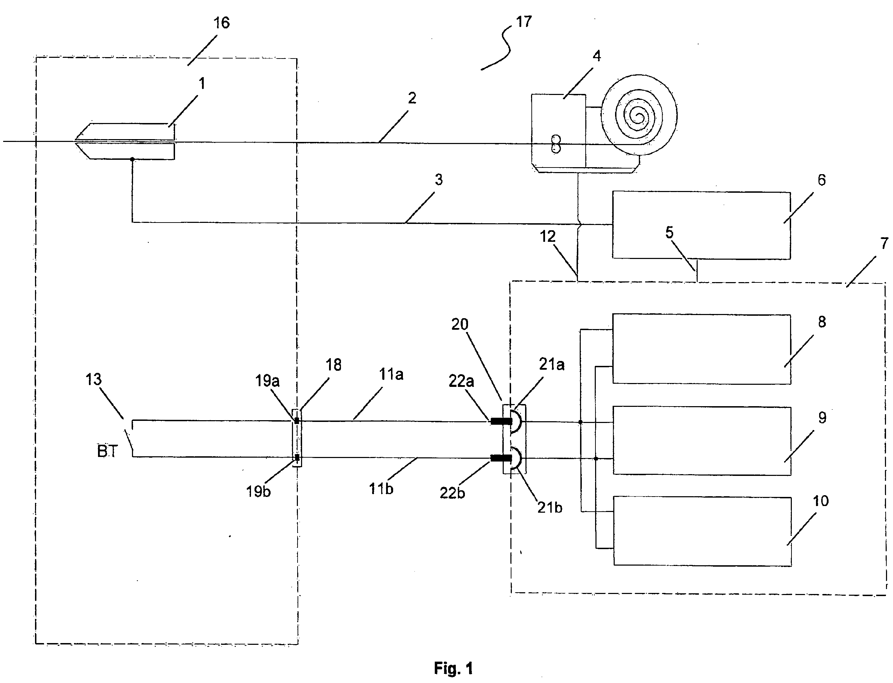

Fig. 1 zeigt eine schematische Darstellung eines MSG-Schweißgeräts 17 mit einer erfindungsgemäßen Steuereinheit 7 und einem Schweißbrenner 16 mit einer Brennertasterschnittstelle 18, die zwei Leiteranschlüsse 19a und 19b aufweist. Das MSG-Schweißgerät 17 umfasst zudem ein Leistungsteil 6 und eine Drahtfördervorrichtung 4 für den Transport eines Schweißdrahts 2. Die Steuereinheit 7 ist über eine Verbindung 5 an das Leistungsteil 6 und über eine Verbindung 12 an die Drahtfördervorrichtung 4 angeschlossen. Die Steuereinheit 7 beinhaltet ein Erkennungsmodul 8, ein Kommunikationsmodul 9 und ein Energieversorgungsmodul 10. Zudem weist die Steuereinheit 7 eine Steuereinheitsschnittstelle 20 auf, die über zwei Kontaktaufnahmen 21a und 21b verfügt.

Der Schweißbrenner 16 weist ein Kontaktrohr 1 auf. Es dient der Beaufschlagung des Schweißdrahts 2 mit vom Leistungsteil 6 bereitgestellter elektrischer Energie. Zu diesem Zweck ist das Leistungsteil 6 über einen Leiter 3 an das Kontaktrohr 1 angeschlossen. Der Schweißbrenner 16 umfasst außerdem einen Brennertaster 13 und eine Brennertasterschnittstelle 18, die von zwei Leiteranschlüssen 19a und 19b gebildet wird. Ein Leiter 11a ist über einen Kabelschuh (nicht dargestellt) an den Leiteranschluss 19a angeschlossen und verbindet diesen über einen Kontaktstift 22a mit der Kontaktaufnahme 21a der Steuereinheitsschnittstelle 20. Ein weiterer Leiter 11b ist über einen weiteren Kabelschuh (nicht dargestellt) an den Leiteranschluss 19b angeschlossen und verbindet diesen über einen Kontaktstift 22b mit der Kontaktaufnahme 21b der Steuereinheitsschnittstelle 20.

Die Steuereinheit 7 enthält neben dem Erkennungsmodul 8, dem Kommunikationsmodul 9 und dem Energieversorgungsmodul 10 einen Mikroprozessor (nicht dargestellt) und einen Flash-Speicher, in dem Programminstruktionen hinterlegt sind, die von dem Mikroprozessor ausgeführt werden. Außerdem enthält die Steuereinheit 7 einen RAM-Speicher (nicht dargestellt), der während des Programmablaufs Programminstruktionen und Operanden aufnimmt. Diese Komponenten der Steuereinheit 7 steuern über die Verbindung 5 das Leistungsteil 6 und über die Verbindung 12 die Drahtfördervorrichtung 4. Die Steuereinheit enthält ferner Messmittel zur Erfassung von Schweißparametern (nicht dargestellt), so dass auch eine Regelung der Werte von Schweißparametern, zum Beispiel der Schweißstromstärke und der Drahtvorschubgeschwindigkeit, möglich ist.

Durch die Betätigung des Brennertasters 13 wird der Stromkreis, der den Brennertaster 13, die Leiter 11a und 11b, die Kontaktstifte 22a und 22b, die Kontaktaufnahmen 21a und 21b, das Energieversorgungsmodul 10, das Erkennungsmodul 8 und das Kommunikationsmodul 9 enthält, geschlossen. Der Stromfluss wird von der Steuereinheit erkannt. Daraufhin steuert diese das Leistungsteil 6 dahingehend, dass eine Lichtbogenzündung durchgeführt wird, indem ein hierzu geeigneter Stromverlauf generiert wird.

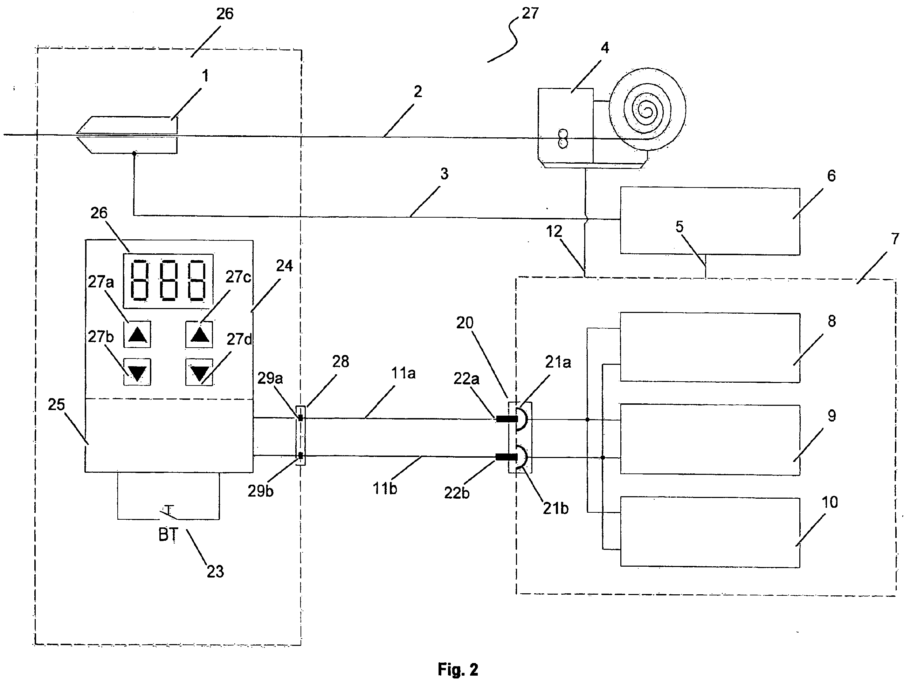

Weiteren Erläuterungen zu den oben genannten Bauteilen und ihren Funktionen wird eine Beschreibung von Fig. 2 vorangestellt. Dabei werden lediglich Unterschiede zu dem Schweißbrenner 16 aus Fig. 1 angesprochen.

Fig. 2 zeigt eine schematische Darstellung eines zweiten MSG-Schweißgeräts 27 mit der Steuereinheit 7 aus Fig. 1 und einem erfindungsgemäßen Schweißbrenner 26 mit einer Datenschnittstelle 28. Wie die Brennertasterschnittstelle 18 aus Fig. 1 wird auch die Datenschnittstelle 28 von zwei Leiteranschlüssen 29a und 29b gebildet und ist über die Leiter 11a und 11b mit der Steuereinheitsschnittstelle 20 verbunden.

Der Schweißbrenner 26 verfügt über ein Bedienermodul 24 und ein Kommunikationsmodul 25. Das Bedienermodul 24 ist mit einer Siebensegmentanzeige 26, sowie vier Bedientasten 27a, 27b, 27c und 27d ausgestattet. Über das Kommunikationsmodul 25 ist das Bedienermodul 24 an die Datenschnittstelle 28 angebunden. Weiterhin weist der Schweißbrenner 26 einen Brennertaster 23 auf, der über das Kommunikationsmodul 25 an die Datenschnittstelle 28 angebunden ist.

Mittels der Siebensegmentanzeige 26 können Werte von Parametern, die mit einem Schweißprozess in Verbindung stehen, angezeigt werden. Dazu zählen eine Schweißstromstärke, eine Schweißspannung, eine Drahtvorschubgeschwindigkeit etc. Bei den Werten dieser Parameter kann es sich entweder um Messwerte oder um von einem Bediener vorgegebene Werte handeln. Über die Bedientasten 27a und 27b kann dieser einstellen, der Wert welchen Parameters angezeigt wird. Über die Bedientasten 27c und 27d kann er einen Vorgabewert für den ausgewählten Parameter erhöhen bzw. vermindern. Werden die Bedientasten 27c und 27d gleichzeitig gedrückt, wird die Vorgabe übernommen und über das Kommunikationsmodul 25, die Datenschnittstelle 28 und die Steuereinheitsschnittstelle 20 an die Steuereinheit 7 gesendet. Messwerte aktueller Schweißparameter werden von der Steuereinheit 7 über die Steuereinheitsschnittstelle 20 und die Datenschnittstelle 28 zur Anzeige auf der Siebensegmentanzeige 26 an das Bedienermodul 24 gesendet.

Bei Betätigung des Brennertasters 23 wird mittel des Kommunikationsmoduls eine entsprechende Information an die Steuereinheit 7 gesendet. Im Gegensatz zu der Brennertasterschnittstelle 18 aus Fig. 1 erfolgt über die Datenschnittstelle 28 ein bidirektionaler Informationsaustausch. Hier ist nicht nur Informationen darüber, in welchem der beiden möglichen Schaltzustände sich der Brennertaster befindet, zu transportieren, sondern es müssen Zahlenwerte übermittelt werden. Daher wird für die Kommunikation über die Datenschnittstelle 28 ein Übertragungsprotokoll eingesetzt, welches Maßnahmen zur Fehlererkennung und zum Umgang mit Kollisionen auf den Leitern 11a und 11b vorsieht. Bei der Kommunikation über die Brennertasterschnittstelle 18 aus Fig. 1 kommt ein solches Übertragungsprotokoll dagegen nicht zum Einsatz. Als Modulationstechnik wird die Pulsweitenmodulation (pulse-width modulation - PWM) eingesetzt.

Die Brennertasterschnittstelle 18 ist eine herkömmliche Brennertasterschnittstelle. Herkömmliche Brennertasterschnittstellen besitzen typischerweise wie die Brennertasterschnittstelle 18 zwei Leiteranschlüsse 19a und 19b, um über zwei Leiter eine elektrische Verbindung zu einer Steuereinheitsschnittstelle herzustellen. Die Steuereinheitsschnittstelle 20 ist äußerlich wie eine herkömmliche, für die Verbindung mit einer herkömmlichen Brennertasterschnittstelle ausgestaltete Steuereinheitsschnittstelle beschaffen, denn auch sie weist mit den Kontaktaufnahmen 21a und 21b genau zwei Leiteranschlüsse auf. Wie Fig. 1 zeigt, ist die Steuereinheitsschnittstelle 20 über die zwei Leiter 11a und 11b mit einer herkömmlichen Brennertasterschnittstelle verbindbar. Sie ist also an eine herkömmliche Brennertasterschnittstelle angepasst.

Wie Fig. 2 zeigt, ist die Steuereinheitsschnittstelle 20 auch mit der Datenschnittstelle 28 des Schweißbrenners 26 verbindbar. Dies liegt daran, dass die Brennertasterschnittstelle 18 und die Datenschnittstelle 28 äußerlich gleich aufgebaut sind. Die Datenschnittstelle 28 weist wie die Brennertasterschnittstelle 18 genau zwei Leiteranschlüsse 29a und 29b auf. Die Datenschnittstelle 28 ist wie eine herkömmliche Brennertasterschnittstelle gestaltet. Für die Verbindung kommen dieselben Leiter 11a und 11b zum Einsatz. Ein Verbindungskabel, welches für die Verbindung einer Steuereinheitsschnittstelle mit einer Brennertasterschnittstelle konzipiert wurde, kann auch hier verwendet werden. Da es nur zwei Leiter besitzen muss, kann sich das Kabel gegenüber Kabeln, die bisher für die Verbindung einer Datenschnittstelle eines Schweißbrenners mit einer Steuereinheitsschnittstelle genutzt wurden, durch eine geringere Dicke, ein geringeres Gewicht und erhöhte mechanische Flexibilität auszeichnen.

Gemäß dem in Fig. 1 und Fig. 2 gezeigten Ausführungsbeispiel wird also die alternative Verbindbarkeit der Steuereinheit 7 sowohl mit der Brennertasterschnittstelle 18 des Schweißbrenners 16 als auch mit der Datenschnittstelle des Schweißbrenners 26 über eine Steuereinheitsschnittstelle 20 ermöglicht, die äußerlich einer Schnittstelle für die Verbindung mit einem herkömmlichen Brennertaster entspricht.

Das Energieversorgungsmodul 10 umfasst eine Spannungsquelle. Es dient der der Energieversorgung des Brennertasterstromkreises des Schweißbrenners 16, wenn die Steuereinheitsschnittstelle 20 mit der Brennertasterschnittstelle 18 des Schweißbrenners 16 verbunden ist. Ist die Brennertasterschnittstelle 18 mit der Datenschnittstelle des Schweißbrenners 26 verbunden, dient das Energieversorgungsmodul der Energieversorgung des Bedienermoduls 24 und des Kommunikationsmodul 25. Bei herkömmlichen Schweißbrennern mit Brennertaster ist es üblich, dass die Mittel zur Energieversorgung für einen Brennertasterstromkreis nicht im Schweißbrenner selbst angeordnet sind. Sollen solche Schweißbrenner zusammen mit der Steuereinheit 7 verwendet werden, ist dies unproblematisch möglich. Da keine Energieversorgungsmittel im Schweißbrenner vorzusehen sind, kann dessen Gewicht verringert sein, was die Handhabbarkeit verbessert.

Das Erkennungsmodul 8 und das Kommunikationsmodul 9 liegen in Form eines gemeinsamen integrierten Schaltkreises vor. Das Erkennungsmodul 8 dient zum Erkennen, ob die Steuereinheitsschnittstelle 20 mit einer Brennertasterschnittstelle eines Schweißbrenners wie der Brennertasterschnittstelle 18 oder mit einer Datenschnittstelle eines Schweißbrenners wie der Datenschnittstelle 28 verbunden ist.

Nach der Durchführung einer Erkennungsprozedur ist bekannt, ob die Steuereinheitsschnittstelle 7 mit einer Brennertasterschnittstelle eines Schweißbrenners oder einer Datenschnittstelle eines Schweißbrenners verbunden ist. Sie kann ihr Kommunikationsverhalten daran anpassen. So kann sich die Steuereinheit 7 wenn die Verbindung mit der Brennertasterschnittstelle 18 des Schweißbrenners 16 erkannt wurde, darauf einrichten lediglich Informationen über die Brennertasterschnittstelle 18 zu empfangen, nicht aber Informationen über die Brennertasterschnittstelle 18 an den Brennertaster 13 zu senden, da diese dort nicht verarbeitet werden können. Zudem kann die Erkennung erlauben, festzulegen, wie über die Steuereinheitsschnittstelle 20 empfangene Informationen seitens der Steuereinheit 7 zu verarbeiten sind. Ist z.B. die Steuereinheitsschnittstelle 20 mit der Brennertasterschnittstelle 18 des Schweißbrenners 16 verbunden, kann die einzig korrekte Interpretation der über die Steuereinheitsschnittstelle 20 empfangenen Signale sein, dass ein Stromfluss bedeutet, dass der Brennertaster 13 betätigt wird, während kein Stromfluss bedeutet, dass er nicht betätigt wird. Eine Interpretation von über die Brennertasterschnittstelle 18 übertragenen Signalen als entsprechend einem Übertragungsprotokoll übertragene Informationen, die z.B. Informationen zur Fehlerkorrektur enthalten, wäre verfehlt und könnte zu einer falschen Reaktion der Steuereinheit führen. Stammen die über die Steuereinheitsschnittstelle 20 empfangenen Signale jedoch von der Datenschnittstelle 28 des Schweißbrenners 26, ist eine solche Interpretation notwendig.

Es ist Aufgabe des Kommunikationsmoduls 9, die tatsächliche Durchführung der Kommunikation zu ermöglichen. Zu diesem Zweck verfügt es über Strommessmittel, die erkennen können, ob ein Strom fließt. Sie sind somit in der Lage, festzustellen, ob der Brennertaster 13 betätigt wurde, wenn die Brennertasterschnittstelle 18 mit der Steuereinheitsschnittstelle 20 verbundenen ist. Das Kommunikationsmodul 9 enthält weiterhin Mittel, die der Verstärkung eingehender Signale, der Umsetzung von eingehenden Signalen in Signale, die von anderen Komponenten der Steuereinheit 7 weiterverarbeitet werden können, der Generierung und/oder Verstärkung von Signalen, die über die Steuereinheitsschnittstelle 20 an eine Datenschnittstelle eines Schweißbrenners übertragen werden sollen, der Extraktionen von Nutzdaten aus von einer Datenschnittstelle empfangenen Daten, die zusätzliche Protokolldaten enthalten, oder dem Hinzufügen von Protokolldaten zu Nutzdaten, die die Steuereinheit 7 an eine solche Datenschnittstelle übertragen möchte, dienen. Das brennerseitige Kommunikationsmodul 25 ist entsprechend aufgebaut.

Dadurch, dass das Erkennungsmodul 8 und das Kommunikationsmodul 9 vorgesehen sind, ist trotz der Möglichkeit, die Steuereinheitsschnittstelle 20 alternativ sowohl mit der Brennertasterschnittstelle 18 des Schweißbrenners 16 als auch mit der Datenschnittstelle 28 des Schweißbrenners 26 zu verbinden, eine funktionierende Kommunikation zwischen der Steuereinheitsschnittstelle 20 einerseits und Brennertasterschnittstelle 18 bzw. Datenschnittstelle 28 andererseits möglich.

Das Erkennungsmodul 8 ist eingerichtet, zum Erkennen, ob die Steuereinheitsschnittstelle 20 mit einer Brennertasterschnittstelle eines Schweißbrenners oder mit einer Datenschnittstelle eines Schweißbrenners verbunden ist, das Kommunikationsmodul 9 zu veranlassen, ein Erkennungssignal über die Steuereinheitsschnittstelle 20 zu senden. Vorgaben bezüglich des Aufbaus des Erkennungssignals sind in einem Speicher der Steuereinheit 7 hinterlegt.

Ist die Steuereinheitsschnittstelle 20 beispielsweise mit der Brennertasterschnittstelle 18 des Schweißbrenners 16 verbunden, ist keine Antwort auf das Erkennungssignal zu erwarten, da der Brennertaster 13 nicht eingerichtet ist, Inforationsübertragungen zu empfangen. Dagegen kann das an die Datenschnittstelle 28 des Schweißbrenners 26 angebundene Kommunikationsmodul 25 das Erkennungssignal empfangen, auswerten, und ein Antwortsignal zurück in Richtung der Steuereinheitsschnittstelle 20 absetzen. Vorgaben bezüglich des Aufbaus des Erkennungssignals sind in einem Speicher des Kommunikationsmoduls 25 hinterlegt. In dem Antwortsignal sind Informationen über das Bedienermodul 24 und über das von dem brennerseitigen Kommunikationsmodul 25 verwendete Übertragungsmodul 25 enthalten.

Das Erkennungsmodul 8 empfängt das Antwortsignal über das Kommunikationsmodul 9 und prüft, ob es sich um das Antwortsignal oder um ein beliebiges, von der Betätigung eines Brennertasters herrührendes Signal handelt. Wurde das Antwortsignal erkannt, stellt die Steuereinheit 7, insbesondere das Kommunikationsmodul 9, ihr Kommunikationsverhalten auf die Kommunikation über die Datenschnittstelle 28 des Schweißbrenners 26 ein. Unter anderem stellt sich das Kommunikationsmodul 9 auf die Verwendung des im Antwortsignal angegebenen Übertragungsprotokolls ein. Wird kein Antwortsignal empfangen, stellt die Steuereinheit 7 ihr Kommunikationsverhalten auf die Kommunikation über eine Brennertasterschnittstelle ein.

Das Erkennungsmodul 8, das Kommunikationsmodul 9 und das Energieversorgungsmodul 10 sind in den Stromkreis eingeschleift, der bei Verbindung der Steuereinheitsschnittstelle 20 mit der Brennertasterschnittstelle 18 bzw. mit der Datenschnittstelle 28 entsteht. Diese drei Module sind daher der Steuereinheitsschnittstelle 20 zugeordnet. In dem hier diskutierten Ausführungsbeispiel sind das Erkennungsmodul 8, das Kommunikationsmodul 9 und das Energieversorgungsmodul 10 parallel zueinander und zu der Brennertasterschnittstelle 18 bzw. zu der Datenschnittstelle 28 geschaltet. Aufgrund der Zuordnung des Kommunikationsmoduls 9 und des Energieversorgungsmoduls 10 zu der Steuereinheitsschnittstelle 20 können nicht nur die Kommunikation zwischen der Steuereinheit 7 einerseits und dem Brennertaster 13 bzw. dem Kommunikationsmodul 25 andererseits über die Steuereinheitsschnittstelle 20 erfolgen. Es kann ebenso die Energieversorgung des Brennertasterstromkreises bzw. des Bedienermoduls 24und des Kommunikationsmoduls 25 über die Steuereinheitsschnittstelle 20 erfolgen.

Das Kommunikationsmodul 9 ist eingerichtet, über die Steuereinheit 20 zu sendende Informationssignale einer von dem Energieversorgungsmodul 10 bereitgestellten Spannung zu überlagern. Zusätzliche Leiteranschlüsse bei der Steuereinheitsschnittstelle 20 und bei der Brennertasterschnittstelle 18 bzw. der Datenschnittstelle 28 werden daher für die Energieübertragung nicht benötig. Die Leiter 11a und 11b dienen der Kommunikation und der Übertragung von elektrischer Energie, was die Dicke, das Gewicht und die mechanische Flexibilität der Verbindung zu dem Schweißbrenner 16 bzw. 26 positiv beeinflusst. Aufgrund der Überlagerung können Kommunikation und Energieversorgung gleichzeitig erfolgen. Die Informationsübertragung ist ohne Unterbrechung der Energieversorgung möglich.

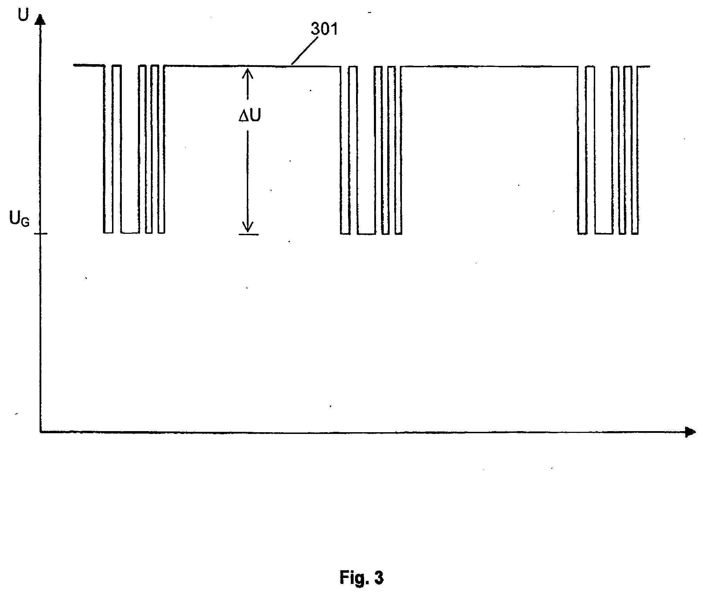

Fig. 3 zeigt eine schematische Darstellung eines Spannungsverlaufs bei der Datenübertragung von der Steuereinheit 20 zur Datenschnittstelle 28 des Schweißbrenners 26. Dabei wird die angesprochene Überlagerungstechnik eingesetzt. Als Modulationstechnik kommt die PWM zum Einsatz. Informationen werden in unterschiedlich breiten Impulsen 301 codiert übertragen.

Auf der horizontalen Achse ist in Fig. 3 die Zeit, auf der vertikalen Achse die zwischen den Leiteranschlüssen 29a und 29b anliegende Spannung U aufgetragen. Die vom Energieversorgungsmodul 10 bereitgestellte Versorgungsgrundspannung ist mit U_{G} bezeichnet. Soll ein Informationssignal übertragen werden, addiert das Kommunikationsmodul 9 zu der Versorgungsgrundspannung U_{G} eine Signalspannung ΔU. Die Versorgungsgrundspannung U_{G} und die Signalspannung ΔU haben beide ein positives Vorzeichen. Nach der Überlagerung ist der Betrag der Spannung U folglich stets größer oder gleich der Versorgungsgrundspannung U_{G}. Eine ausreichende Energieversorgung des Bedienermoduls 24 und des Kommunikationsmoduls 25 ist folglich gewährleistet.

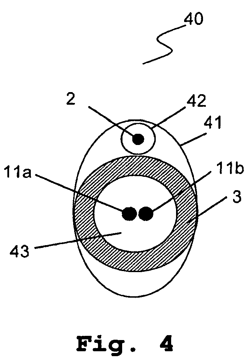

Fig. 4 zeigt eine schematische Darstellung eines Querschnitts eine Schlauchpakets 40 zum Verbinden der Steuereinheitsschnittstelle 20 der Steuereinheit 7 aus Fig. 1 und Fig. 2 einerseits und der Brennertasterschnittstelle 18 aus Fig. 1 oder der Datenschnittstelle 28 aus Fig. 2 andererseits.

Der Leiter 3 für die Energieversorgung des Schweißprozesses ist in seinem Inneren 43 hohl. Darin sind die Leiter 11a und 11b als innere Leiter angeordnet, so dass der Leiter 43 diese umgibt. Das Innere 43 des Leiters 3 ist zur Führung eines Schutzgasstroms vorgesehen. Ein zusätzlicher Schlauch für die Schutzgaszufuhr ist daher nicht nötig. Im Schweißbetrieb wirkt der Schutzgastrom als Isolierung zwischen den inneren Leitern 11a und 11b sowie dem umgebenden Leiter 3. Außerhalb des Leiters 3 ist ein Drahtführungsschlauch 42 angeordnet, in welchem der Schweißdraht 2 geführt wird. Der Drahtführungsschlauch 42 könnte alternativ jedoch auch innerhalb des Leiters 3 angeordnet sein. Der Leiter 3 und der Drahtführungsschlauch 42 sind von einer elastischen Isolationsummantelung 41 umgeben.

Durch die doppelte Ausnutzung des Inneren 43 des Leiters 3 für die Anordnung der Leiter 11a und 11b sowie zur Führung eines Schutzgasstroms, ist das Schlauchpaket 40 in seinem Querschnitt besonders kompakt aufgebaut. Aus diesem Grund weist es eine vergleichsweise geringe Dicke auf, was mit einer erhöhten mechanischen Flexibilität einhergeht.

## Patentansprüche

1. Steuereinheit (7) für ein Schweißgerät (17; 27), wobei die Steuereinheit (7) eine Steuereinheitsschnittstelle (20) umfasst,
wobei die Steuereinheitsschnittstelle (20) alternativ sowohl mit einer Brennertasterschnittstelle (18) eines Schweißbrenners (16) als auch mit einer Datenschnittstelle (28) eines Schweißbrenners (26) verbindbar ist,
**dadurch gekennzeichnet, dass** die Steuereinheit (7) Erkennungsmittel (8) zum Erkennen, ob die Steuereinheitsschnittstelle (7) mit einer Brennertasterschnittstelle (18) eines Schweißbrenners (16) oder mit einer Datenschnittstelle (28) eines Schweißbrenners (26) verbunden ist, und Kommunikationsmittel (9) für die Kommunikation der Steuereinheit (7) über die Steuereinheitsschnittstelle (20) und die Brennertasterschnittstelle (18) eines Schweißbrenners (16) sowie für die Kommunikation der Steuereinheit (7) über die Steuereinheitsschnittstelle (20) und eine Datenschnittstelle (28) eines Schweißbrenners (26) umfasst.

2. Steuereinheit (7) nach Anspruch 1, **dadurch**
**gekennzeichnet, dass** die Steuereinheitsschnittstelle (20) maximal zwei Leiteranschlüsse (21a, 21b) zur Verbindung mit einer Brennertasterschnittstelle (18) eines Schweißbrenners (16) bzw. einer Datenschnittstelle (28) eines Schweißbrenners (26) umfasst.

3. Steuereinheit (7) nach Anspruch 2, **dadurch gekennzeichnet, dass** die Steuereinheitsschnittstelle (20) lediglich einen Leiteranschluss zur Verbindung mit einer Brennertasterschnittstelle (18) eines Schweißbrenners (16) bzw. einer Datenschnittstelle (28) eines Schweißbrenners (26) umfasst.

4. Steuereinheit (7) nach einem der vorhergehenden Ansprüche, **dadurch gekennzeichnet, dass** die Erkennungsmittel (8) eingerichtet sind, zum Erkennen, ob die Steuereinheitsschnittstelle (20) mit einer Brennertasterschnittstelle (18) eines Schweißbrenners (16) oder mit einer Datenschnittstelle (28) eines Schweißbrenners (26) verbunden ist, die Kommunikationsmittel (9) zu veranlassen, ein Erkennungssignal über die Steuereinheitsschnittstelle (20) zu senden.

5. Steuereinheit (7) nach einem der vorhergehenden Ansprüche, **dadurch gekennzeichnet, dass** die Steuereinheit (7) Energieversorgungsmittel (10) zur Energieversorgung eines Stromkreises eines Brennertasters (13) eines Schweißbrenners (16) umfasst.

6. Steuereinheit (7) nach Anspruch 5, **dadurch gekennzeichnet, dass** die Kommunikationsmittel (9) und die Energieversorgungsmittel (10) der Steuereinheitsschnittstelle (20) zugeordnet sind.

7. Steuereinheit (7) nach Anspruch 6, **dadurch gekennzeichnet, dass** die Kommunikationsmittel (9) eingerichtet sind, über die Steuereinheit (20) zu sendende Informationssignale einer von den Energieversorgungsmitteln (10) bereitgestellten Spannung (U_{G}) bzw. einem von den Energieversorgungsmitteln (10) bereitgestellten Strom zu überlagern.

8. Schweißbrenner (26) mit einer Datenschnittstelle (28),
wobei die Datenschnittstelle (28) mit einer Steuereinheitsschnittstelle (20) einer Steuereinheit (7) für ein Schweißgerät (17; 27) nach Anspruch 4 verbindbar ist,
**dadurch gekennzeichnet, dass** an die Datenschnittstelle (28) des Schweißbrenners (26) eine Komponente, insbesondere ein Kommunikationsmodul (25), angebunden ist, welche eingerichtet ist, das Erkennungssignal zu empfangen, auszuwerten und ein Antwortsignal zurück in Richtung der Steuereinheit (7) abzusetzen.

9. Schweißbrenner (26) nach Anspruch 8, **dadurch gekennzeichnet, dass** die Datenschnittstelle (28) maximal zwei Leiteranschlüsse (29a, 29b) zur Verbindung mit der Steuereinheitsschnittstelle (20) umfasst.

10. Schweißbrenner (26) nach Anspruch 9, **dadurch gekennzeichnet, dass** die Datenschnittstelle (28) lediglich einen Leiteranschluss zur Verbindung mit der Steuereinheitsschnittstelle (20) umfasst.

11. Schweißgerät (27) mit einer Steuereinheit (7) nach einem der Ansprüche 1 bis 7 und einem Schweißbrenner, insbesondere einem Schweißbrenner (26) nach einem der Ansprüche 8 bis 10, mit einer Datenschnittstelle (28), wobei die Datenschnittstelle (28) mit der Steuereinheitsschnittstelle (20) der Steuereinheit (7) verbindbar ist.

12. Schweißgerät (27) nach Anspruch 11, **dadurch gekennzeichnet, dass** es Verbindungsmittel (40) zum Verbinden einer Steuereinheitsschnittstelle (20) einer Steuereinheit (7) nach einem der Ansprüche 1 bis 7 einerseits und einer Brennertasterschnittstelle (18) eines Schweißbrenners (16) oder einer Datenschnittstelle (28) eines Schweißbrenners (26), insbesondere eines Schweißbrenners (26) nach einem der Ansprüche 8-10, wobei die Datenschnittstelle mit der Steuereinheitsschnittstelle verbindbar ist, andererseits umfasst, wobei die Verbindungsmittel (40) einen für die Verbindung der Steuereinheitsschnittstelle (20) mit der Brennertasterschnittstelle (18) bzw. mit der Datenschnittstelle (28) vorgesehenen inneren Leiter (11a, 11b) und einen diesen umgebenden Leiter (3) für die Energieversorgung eines Schweißprozesses umfassen.

13. Schweißgerät (27) nach Anspruch 12, **dadurch gekennzeichnet, dass** das Innere (43) des umgebenden Leiters (3) zur Führung eines Schutzgasstroms vorgesehen ist.

## Claims

1. Control unit (7) for a welding device (17; 27), wherein the control unit (7) comprises a control unit interface (20),
wherein the control unit interface (20) is connectable alternatively both with a torch push-button interface (18) of a welding torch (16) as well as with a data interface (28) of a welding torch (26),
**characterised in that** the control unit (7) comprises detection means (8) for detecting whether the control unit interface (7) is connected with the torch push-button interface (18) of a welding torch (16) or with a data interface (28) of a welding torch (26), and communication means (9) for the communication of the control unit (7) via the control unit interface (20) and the torch push-button interface (18) of a welding torch (16) as well as for the communication of the control unit (7) via the control unit interface (20) and the data interface (28) of a welding torch (26).

2. Control unit (7) according to Claim 1, **characterised in that** the control unit interface (20) comprises at most two conductor connections (21a, 21b) for connecting with a torch push-button interface (18) of a welding torch (16) or a data interface (28) of a welding torch (26).

3. Control unit (7) according to Claim 2, **characterised in that** the control unit interface (20) comprises only one conductor connection for connecting with a torch push-button interface (28) of a welding torch (16) or a data interface (28) of a welding torch (26).

4. Control unit (7) according to any one of the preceding claims, **characterised in that** the detection means (8) are configured to cause the communications means (9) to send a detection signal via the control unit interface (20) for detecting whether the control unit interface (20) is connected with a torch push-button interface (18) of a welding torch (16) or with a data interface (28) of a welding torch (26).

5. Control unit (7) according to any one of the preceding claims, **characterised in that** the control unit (7) comprises energy supply means (10) for the energy supply of an electrical circuit of a torch push-button (13) of a welding torch (16).

6. Control unit (7) according to Claim 5, **characterised in that** the communications means (9) and the energy supply means (10) are assigned to the control unit interface (20).

7. Control unit (7) according to Claim 6, **characterised in that** the communications means (9) are configured to superimpose information signals to be sent via the control unit (20) on a voltage (U_{G}) provided by the energy supply means (10) or on a current provided by the energy supply means (10).

8. Welding torch (26) with a data interface (28),
wherein the data interface (28) is connectable with a control unit interface (20) of a control unit (7) for a welding device (17; 27) according to Claim 4,
**characterised in that** a component, in particular a communications module (25), is attached to the data interface (28) of the welding torch (26), which communications module is configured to receive the detection signal, to evaluate it and to transmit a response signal back in the direction of the control unit (7).

9. Welding torch (26) according to Claim 8, **characterised in that** the data interface (28) comprises at most two conductor connections (29a, 29b) for connecting with the control unit interface (20).

10. Welding torch (26) according to Claim 9, **characterised in that** the data interface (28) comprises only one conductor connection for connecting with the control unit interface (20).

11. Welding device (27) with a control unit (7) according to any one of the Claims 1 to 7 and a welding torch, in particular a welding torch (26) according to any one of the Claims 8 to 10, with a data interface (28), wherein the data interface (28) is connectable with the control unit interface (20) of the control unit (7).

12. Welding device (27) according to Claim 11, **characterised in that** it comprises connecting means (40) for connecting on the one hand a control unit interface (20) of a control unit (7) according to any one of the Claims 1 to 7 and on the other hand a torch push-button interface (18) of the welding torch (16) or a data interface (28) of a welding torch (26), in particular of a welding torch (26) according to any one of the Claims 8 to 10, wherein the data interface is connectable with the control unit interface, wherein the connection means (40) comprise an inner conductor (11a, 11b) provided for the connection of the control unit interface (20) with the torch push-button interface (18) or with the data interface (28) and a conductor surrounding said inner conductor for the energy supply of a welding process.

13. Welding device (27) according to Claim 12, **characterised in that** the interior (43) of the surrounding conductor (3) is provided for guiding an inert gas flow.

## Revendications

1. Unité de commande (7) pour un appareil de soudage (17; 27), où l'unité de commande (7) comporte une interface d'unité de commande (20),
l'interface d'unité de commande (20) étant susceptible d'être alternativement reliée aussi bien à une interface de touche du brûleur (18) d'une torche de soudage (16) qu'à une interface de données (28) d'une torche de soudage (26),
**caractérisée en ce que** l'unité de commande (7) comporte des moyens de détections (8) permettant de détecter si l'interface d'unité de commande (7) est reliée à une interface de touche du brûleur (18) d'une torche de soudage (16) ou à une interface (28) d'une torche de soudage (26), et des moyens de communication (9) pour la communication de l'unité de commande (7) à l'aide de l'interface d'unité de commande (20) et de l'interface de touche du brûleur (18) d'une torche de soudage (16) ainsi que pour la communication de l'unité de commande (7) à l'aide de l'interface de module de commande (20) et d'une interface de données (28) d'une touche de soudage (26).

2. Unité de commande (7) selon la revendication 1,
**caractérisée en ce que** l'interface d'unité de commande (20) comporte au maximum deux bornes conductrices (21a, 21b) destinées à être reliées à une interface de touche du brûleur (18) d'une torche de soudage (16) ou à une interface de données (28) d'une touche de soudage (26).

3. Unité de commande (7) selon la revendication 2,
**caractérisée en ce que** l'interface d'unité de commande (20) comporte uniquement une borne conductrice destinée à être reliée à une interface de touche du brûleur (18) d'une torche de soudage (16) ou à une interface de données (28) d'une torche de soudage (26).

4. Unité de commande (7) selon une des revendications précédentes, **caractérisée en ce que** les moyens de détection (8) sont disposés de sorte à faire faire les moyens de communication (9) d'envoyer un signal de détection à l'aide de l'interface d'unité de commande (20) pour détecter si l'interface d'unité de commande (20) est reliée à une interface de touche du brûleur (18) d'une torche de soudage (16) ou à une interface de données (28) d'une torche de soudage (26).

5. Unité de commande (7) selon une des revendications précédentes, **caractérisée en ce que** l'unité de commande (7) comporte des moyens d'approvisionnement en énergie (10) pour approvisionner en énergie un circuit électrique d'une touche du brûleur (13) d'une torche de soudage (16).

6. Unité de commande (7) selon la revendication 5, **caractérisée en ce que** les moyens de communication (9) et les moyens d'approvisionnement en énergie (10) sont attribués à l'interface d'unité de commande (20).

7. Unité de commande (7) selon la revendication 6, **caractérisée en ce que** les moyens de communication (9) sont disposés de sorte à superposer les signaux d'information, à émettre à l'aide de l'unité de commande (20), à une tension (U_{G}) fournie par les moyens d'approvisionnement en énergie (10) ou à un courant fourni par les moyens d'approvisionnement en énergie (10).

8. Torche de soudage (26) avec une interface de données (28), où l'interface de données (28) est susceptible d'être reliée à une interface d'unité de commande (20) d'une unité de commande (7) pour un appareil de soudage (17; 27) selon la revendication 4,
**caractérisée en ce qu'**une composante, en particulier un module de communication (25), est reliée à l'interface de données (28) de la torche de soudage (16), ce module étant disposé de sorte à recevoir et évaluer le signal de détection, et envoyer un signal de réponse en retour en direction de l'unité de commande (7).

9. Torche de soudage (26) selon la revendication 8, **caractérisée en ce que** l'interface de données (28) comporte au maximum deux bornes conductrices (29a, 29b) destinées à être reliées à l'interface de l'unité de commande (20).

10. Torche de soudage (26) selon la revendication 9, **caractérisée en ce que** l'interface de données (28) comporte uniquement une borne conductrice pouvant être reliée à l'interface de l'unité de commande (20).

11. Appareil de soudage (27) avec une unité de commande (7) selon une des revendications de 1 à 7 et une torche de soudage, en particulier une torche de soudage (26) selon une des revendications de 8 à 10, avec une interface de données (28), où l'interface de données (28) est susceptible d'être reliée à l'interface de l'unité de commande (20) de l'unité de commande (7).

12. Appareil de soudage (27) selon la revendication 11, **caractérisé en ce que** l'on prévoit des moyens de raccordement (40) permettant de relier d'une part une interface d'unité de commande (20) d'une unité de commande (7) selon une des revendications de 1 à 7 et d'autre part une interface de touche du brûleur (18) d'une torche de soudage (26) ou une interface de données (28) d'une torche de soudage (26), en particulier une torche de soudage (26) selon une des revendications de 8 à 10, où l'interface de données est susceptible d'être reliée à l'interface de l'unité de commande, où les moyens de raccordement (40) comportent une âme intérieure (11a, 11b), prévue pour le raccordement de l'interface de l'unité de commande (20) à l'interface de la touche du brûleur (18) ou à l'interface de données (28), et une âme (3) environnante cette l'âme intérieure (11a, 11b) pour l'approvisionnement en énergie d'un processus de soudage.

13. Appareil de soudage (27) selon la revendication 12, **caractérisé en ce que** l'intérieur (43) de l'âme environnante (3) permet le passage d'un courant de gaz de protection.
